# EUROPEAN PATENT APPLICATION

(11) **EP 4 553 865 A1**
(43) Date of publication of application: **14.05.2025**
(21) Application number: 24847256.5
(22) Date of filing: 14.05.2024
(51) Int. Cl.: H01F 27/30

(54) **MAGNETIC ASSEMBLY**

(30) Priority: 28.09.2023 CN 202311271445
(71) Applicant: Delta Electronics, Inc., Taoyuan City 33370 (TW)
(72) Inventor: LO, Chih-Hung, Taoyuan Taiwan 32063 (TW); YEN, Chun-Ching, Taoyuan Taiwan 32063 (TW); LIAO, Chen-En, Taoyuan Taiwan 32063 (TW)
(74) Representative: Uexküll & Stolberg
(86) International application number: PCT/CN2024/093046
(87) International publication number: WO 2025/066167

(57) **Abstract**

A magnetic device is provided. The magnetic device includes a magnetic core, at least two windings and a magnetic covering portion. The magnetic core includes a magnetic core main body and a hollow portion. The hollow portion runs through a center of the magnetic core main body. The at least two windings are disposed around the magnetic core main body. Each of the at least two windings is at least partially penetrated through the hollow portion. At least portion of the at least two windings is disposed between at least portion of the magnetic covering portion and another portion of the magnetic covering portion.

## Description

### FIELD OF THE INVENTION

The present disclosure relates to power electronics, and more particularly to a magnetic device.

### BACKGROUND OF THE INVENTION

Nowadays, the power supply unit includes a filter circuit for suppressing the electromagnetic interference generated during switching. The filter circuit includes two stages of filter modules. The first-stage filter module includes a common mode inductor and a X capacitor. The common mode inductor is a common mode magnetic device. The second-stage filter module includes a differential mode inductor and a Y capacitor. The differential mode inductor is a differential mode magnetic device. The two stages of filter modules are installed on the main circuit board. The filter circuit suppresses the differential noise of the electromagnetic interference by the differential mode inductor. However, the filter circuit includes two magnetic devices to form a two-stages structure. Consequently, the filter circuit including the two magnetic devices has larger size and greater number of elements. The power supply unit has disadvantage of larger size and not being miniaturized.

Therefore, there is a need of providing a magnetic device to obviate the drawbacks encountered from the prior arts.

### SUMMARY OF THE INVENTION

The present disclosure provides a magnetic device. The first winding and the second winding of the magnetic device of the present disclosure are disposed between a portion of the magnetic covering portion and another portion of the magnetic covering portion. The leakage inductance and the impedance in high frequency of the magnetic device are enhanced according to the structure of the magnetic covering portion so as to suppress the differential noise. The magnetic device of the present disclosure is a single component so as to have smaller size and smaller number of elements. Consequently, the volume of the power supply unit applied for the magnetic device of the present disclosure is reduced, and has advantage of smaller size, enhanced power density and power efficiency. Moreover, the number of the soft magnetic part of the magnetic device of the present disclosure is reduced. The soft magnetic part only covers two sides of the magnetic core main body. The magnetic device of the present disclosure covering by the soft magnetic parts is an open structure. The thermal dissipation capability is enhanced and the temperature of the power supply applied with the magnetic device is reduced.

In accordance with an aspect of the present disclosure, there is provided a magnetic device. The magnetic device includes a magnetic core, at least two windings and a magnetic covering portion. The magnetic core includes a magnetic core main body and a hollow portion. The hollow portion runs through a center of the magnetic core main body. The at least two windings are disposed around the magnetic core main body. Each of the at least two windings is at least partially penetrated through the hollow portion. At least portion of the at least two windings is disposed between at least portion of the magnetic covering portion and another portion of the magnetic covering portion.

### BRIEF DESCRIPTION OF THE DRAWINGS

FIG. 1A is a schematic view illustrating a magnetic device according to a first embodiment of the present disclosure;
FIG. 1B is a schematic exploded view illustrating the magnetic device of FIG. 1A;
FIG. 2A is a schematic view illustrating a magnetic device according to a second embodiment of the present disclosure;
FIG. 2B is a schematic exploded view illustrating the magnetic device of FIG. 2A;
FIG. 3A is a schematic view illustrating a magnetic device according to a third embodiment of the present disclosure;
FIG. 3B is a schematic exploded view illustrating the magnetic device of FIG. 3A;
FIG. 4A is a schematic view illustrating a magnetic device according to a fourth embodiment of the present disclosure;
FIG. 4B is a schematic exploded view illustrating the magnetic device of FIG. 4A;
FIG. 5A is a schematic view illustrating a magnetic device according to a fifth embodiment of the present disclosure;
FIG. 5B is a schematic exploded view illustrating the magnetic device of FIG. 5A;
FIG. 6A is a schematic view illustrating a magnetic device according to a sixth embodiment of the present disclosure;
FIG. 6B is a schematic exploded view illustrating the magnetic device of FIG. 6A;
FIG. 7A is a schematic view illustrating a magnetic device according to a seventh embodiment of the present disclosure;
FIG. 7B is a schematic exploded view illustrating the magnetic device of FIG. 7A;
FIG. 8A is a schematic view illustrating a magnetic device according to an eighth embodiment of the present disclosure;
FIG. 8B is a schematic exploded view illustrating the magnetic device of FIG. 8A;
FIG. 9 is a schematic exploded view illustrating a magnetic device according to a ninth embodiment of the present disclosure;
FIG. 10A is a schematic view illustrating a magnetic device according to a tenth embodiment of the present disclosure;
FIG. 10B is a schematic exploded view illustrating the magnetic device of FIG. 10A;
FIG. 11A is a schematic view illustrating a magnetic device according to an eleventh embodiment of the present disclosure;
FIG. 11B is a schematic exploded view illustrating the magnetic device of FIG. 11A;
FIG. 12A is a schematic view illustrating a magnetic device according to a twelfth embodiment of the present disclosure;
FIG. 12B is a schematic exploded view illustrating the magnetic device of FIG. 12A;
FIG. 13A is a schematic view illustrating a magnetic device according to a thirteenth embodiment of the present disclosure;
FIG. 13B is a schematic exploded view illustrating the magnetic device of FIG. 13A;
FIG. 14A shows sequence diagram of voltage and frequency of the conventional magnetic device; and
FIG. 14B shows sequence diagram of voltage and frequency of the magnetic device of the present disclosure.

### Description of reference numerals:

1, 1a, 1b, 1c, 1d, 1e, 1f, 1g, 1h, 1i, 1j, 1k, 1m: magnetic device
2: magnetic core
21: magnetic core main body
211: first lateral part
212: second lateral part
213: first connection part
214: second connection part
21a: outer periphery surface
21b: inner periphery surface
21c: first lateral surface
21d: second lateral surface
22: hollow portion
23: gap
3: first winding
4: second winding
5: magnetic covering portion
51: first soft magnetic part
52: second soft magnetic part
53: third soft magnetic part
54: fourth soft magnetic part
55: first covering part
56: second covering part
57: opening
6: fixing portion
71: first interval
72: second interval
8: magnetic plate
81: partition plate
82: protrusion
9: base
91: bottom plate
92: locating part
93: first locating groove
94: second locating groove

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

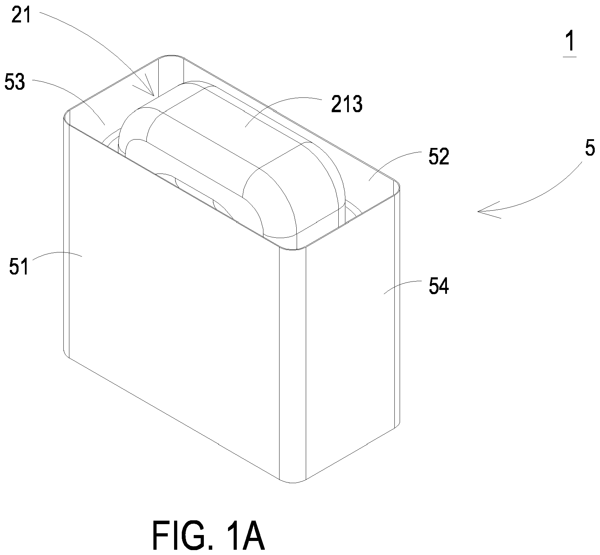

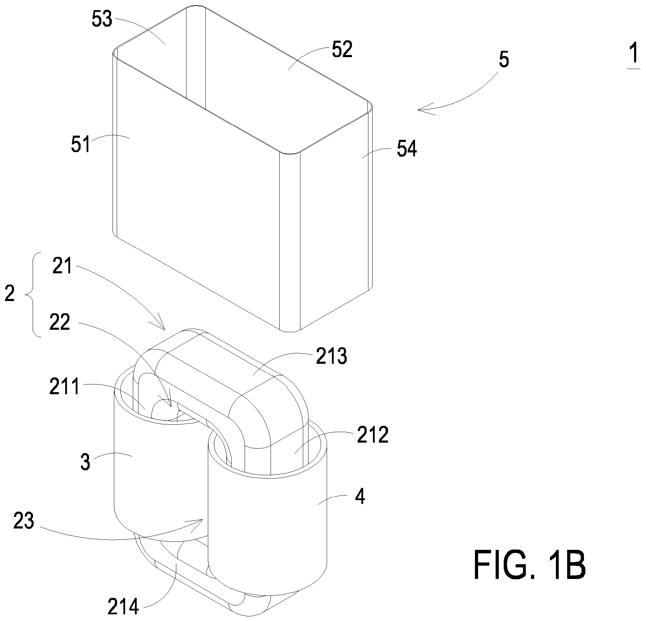

FIG. 1A is a schematic view illustrating a magnetic device according to a first embodiment of the present disclosure. FIG. 1B is a schematic exploded view illustrating the magnetic device of FIG. 1A. As shown in FIGS. 1A and 1B, the magnetic device 1 of this embodiment includes a magnetic core 2, a first winding 3, a second winding 4 and a magnetic covering portion 5. The magnetic core 2 includes a magnetic core main body 21 and a hollow portion 22. As shown in FIG. 1B, the magnetic core main body 21 of this embodiment is a hollow rectangular structure and includes a first lateral part 211, a second lateral part 212, a first connection part 213 and a second connection part 214. The first lateral part 211 and the second lateral part 212 are opposite to each other. The first connection part 213 and the second connection part 214 are opposite to each other. The first connection part 213 is connected between a first end of the first lateral part 211 and a first end of the second lateral part 212. The second connection part 214 is connected between a second end of the first lateral part 211 and a second end of the second lateral part 212. The hollow portion 22 runs through the magnetic core main body 21 (e.g., the center of the magnetic core main body 21), disposed between the first lateral part 211 and the second lateral part 212, and disposed between the first connection part 213 and the second connection part 214.

The first winding 3 is disposed around a portion of the magnetic core main body 21. For example, the first winding 3 is disposed around the first lateral part 211 of the magnetic core main body 21. A portion of the first winding 3 is penetrated through the hollow portion 22 and adjacent to one side of the magnetic core main body 21. The second winding 4 is disposed around another portion of the magnetic core main body 21. For example, the second winding 4 is disposed around the second lateral part 212 of the magnetic core main body 21. A portion of the second winding 4 is penetrated through the hollow portion 22 and adjacent to another side of the magnetic core main body 21. In this embodiment, the space between the first winding 3 disposed in the hollow portion 3 and the second winding 4 disposed in the hollow portion 3 forms a gap 23.

Preferably but not exclusively, the magnetic covering portion 5 is a soft magnetic plate or a magnetic tape. The thickness of the magnetic covering portion 5 is less than 1.5mm. In this embodiment, the magnetic covering portion 5 includes a first soft magnetic part 51, a second soft magnetic part 52, a third soft magnetic part 53 and a fourth soft magnetic part 54. The first soft magnetic part 51 and the second soft magnetic part 52 are opposite to each other. The third soft magnetic part 53 and the fourth soft magnetic part 54 are opposite to each other and disposed between the first soft magnetic part 51 and the second soft magnetic part 52. The first soft magnetic part 51, the second soft magnetic part 52, the third soft magnetic part 53 and the fourth soft magnetic part 54 are integrally formed into one piece. The first soft magnetic part 51, the second soft magnetic part 52, the third soft magnetic part 53 and the fourth soft magnetic part 54 of the magnetic covering portion 5 covers and attaches the first winding 3 and the second winding 4. The first soft magnetic part 51, the second soft magnetic part 52, the third soft magnetic part 53 and the fourth soft magnetic part 54 of the magnetic covering portion 5 are disposed around the first lateral part 211 and the second lateral part 212 of the magnetic core main body 21. The first winding 3 is disposed between the first lateral part 211 of the magnetic core main body 21 and the first soft magnetic part 51 of the magnetic covering portion 5, disposed between the first lateral part 211 of the magnetic core main body 21 and second soft magnetic part 52 of the magnetic covering portion 5, and disposed between the first lateral part 211 of the magnetic core main body 21 and third soft magnetic part 53 of the magnetic covering portion 5. The second winding 4 is disposed between the second lateral part 212 of the magnetic core main body 21 and the first soft magnetic part 51 of the magnetic covering portion 5, disposed between the second lateral part 212 of the magnetic core main body 21 and second soft magnetic part 52 of the magnetic covering portion 5, and disposed between the second lateral part 212 of the magnetic core main body 21 and fourth soft magnetic part 54 of the magnetic covering portion 5. In this embodiment, the first winding 3 is disposed between the third soft magnetic part 53 of the magnetic covering portion 5 and the second winding 4. The second winding is disposed between the fourth soft magnetic part 54 of the magnetic covering portion 5 and the first winding 3. In this embodiment, the first soft magnetic part 51, the second soft magnetic part 52, the third soft magnetic part 53 and the fourth soft magnetic part 54 of the magnetic covering portion 5 are not penetrated through the hollow portion 22 and not penetrated through the gap 23 between the first winding 3 and the second winding 4. In this embodiment, the permeability, the internal structure layer, the cross-sectional area, and the number of turns of the magnetic covering portion 5 are correlated with the leakage inductance of the magnetic device 1. The leakage inductance of the magnetic device 1 can be adjusted by modifying the permeability, the internal structure layer, the cross-sectional area, and the number of turns of the magnetic covering portion 5. In an embodiment, the magnetic device 1 includes a fixing rack (not shown) for fixing the magnetic core 2. For example, the second connection part 214 of the magnetic core main body 21 of the magnetic core 2 is disposed on the fixing rack so as to fix the magnetic core 2 on the fixing rack.

From the above, the first winding 3 and the second winding 4 of the magnetic device 1 of the present disclosure are disposed between a portion of the magnetic covering portion 5 and another portion of the magnetic covering portion 5. The leakage inductance and the impedance in high frequency of the magnetic device 1 are enhanced according to the structure of the magnetic covering portion 5 so as to suppress the differential noise. The conventional filter circuit suppresses the differential noise with two electronic devices (i.e., the common mode magnetic device and the differential mode magnetic device). Compared with the conventional filter circuit, the magnetic device 1 of the present disclosure is a single component so as to have smaller size and smaller number of elements. Consequently, the volume of the power supply unit applied for the magnetic device 1 of the present disclosure is reduced, and has advantage of smaller size, enhanced power density and power efficiency.

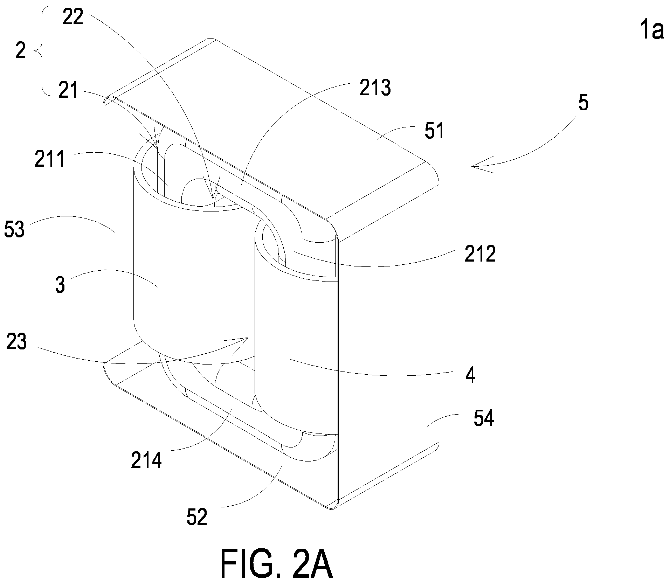

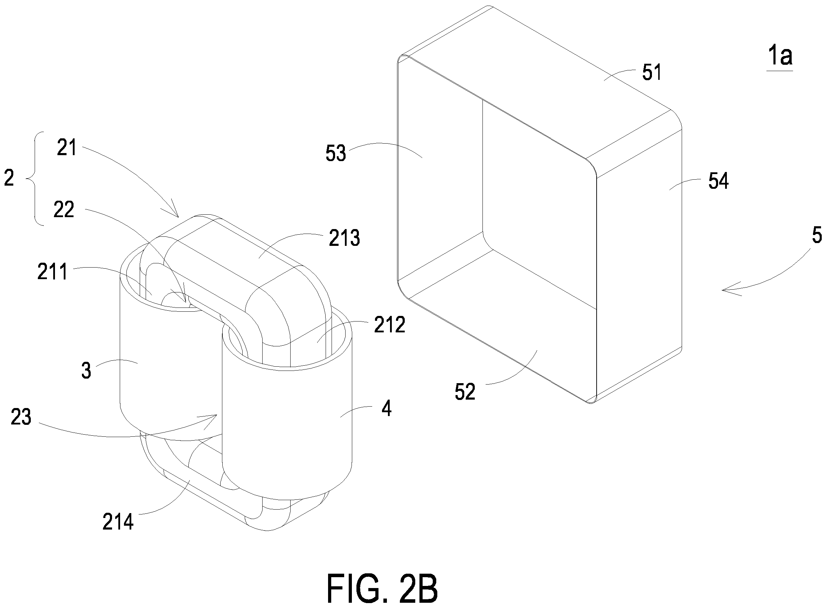

In some embodiments, the structures of the magnetic covering portion 5 covering the first winding 3 and the second winding 4 can be adjusted. FIG. 2A is a schematic view illustrating a magnetic device according to a second embodiment of the present disclosure. FIG. 2B is a schematic exploded view illustrating the magnetic device of FIG. 2A. Compared with the magnetic device 1 of FIGS. 1A and 1B, as shown in FIGS. 2A and 2B, the first soft magnetic part 51, the second soft magnetic part 52, the third soft magnetic part 53 and the fourth soft magnetic part 54 of the magnetic covering portion 5 of the magnetic device 1a of this embodiment covers the first lateral part 211, the second lateral part 212, the first connection part 213 and the second connection part 214. The first winding 3 is disposed between the first lateral part 211 of the magnetic core main body 21 and the third soft magnetic part 53 of the magnetic covering portion 5. The second winding 4 is disposed between the second lateral part 212 of the magnetic core main body 21 and the fourth soft magnetic part 54 of the magnetic covering portion 5. In this embodiment, the first winding 3 is disposed between the third soft magnetic part 53 of the magnetic covering portion 5 and the second winding 4. The second winding 4 is disposed between the fourth soft magnetic part 54 of the magnetic covering portion 5 and the first winding 3.

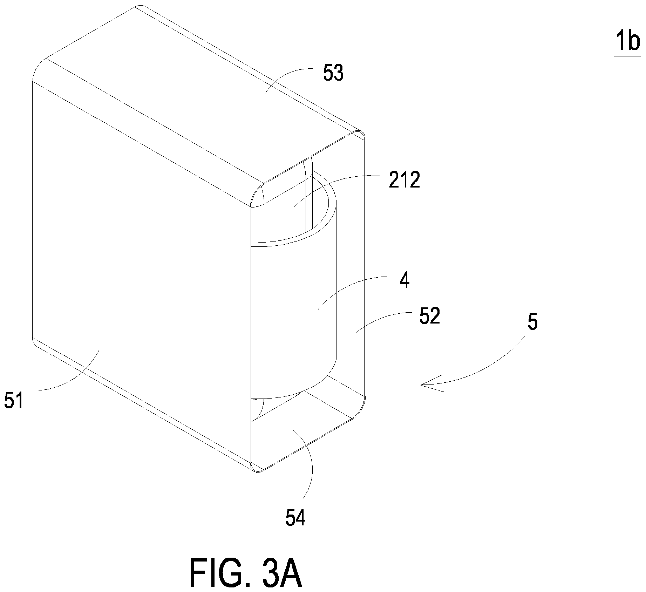

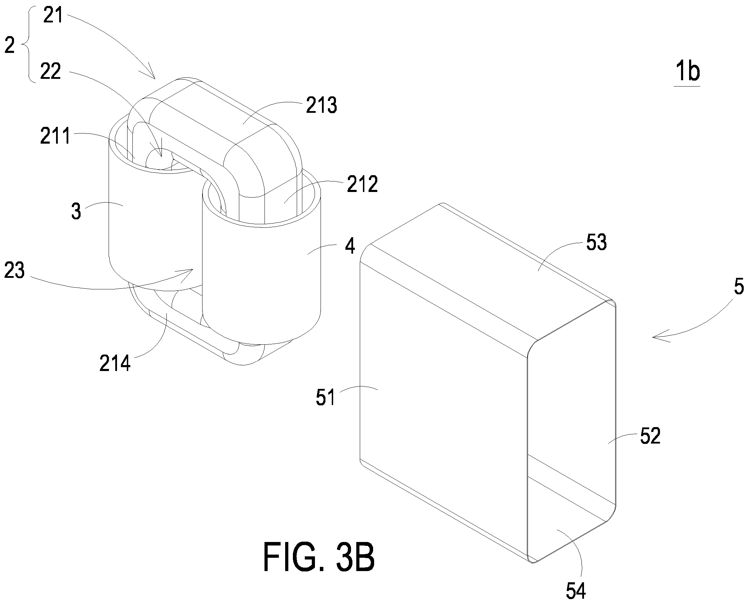

FIG. 3A is a schematic view illustrating a magnetic device according to a third embodiment of the present disclosure. FIG. 3B is a schematic exploded view illustrating the magnetic device of FIG. 3A. Compared with the magnetic device 1 of FIGS. 1A and 1B, as shown in FIGS. 3A and 3B, the first soft magnetic part 51, the second soft magnetic part 52, the third soft magnetic part 53 and the fourth soft magnetic part 54 of the magnetic covering portion 5 of the magnetic device 1b of this embodiment covers the first connection part 213 and the second connection part 214. The first winding 3 is disposed between the first lateral part 211 of the magnetic core main body 21 and the first soft magnetic part 51 of the magnetic covering portion 5, and disposed between the first lateral part 211 of the magnetic core main body 21 and the second soft magnetic part 52 of the magnetic covering portion 5. The second winding 4 is disposed between the second lateral part 212 of the magnetic core main body 21 and the first soft magnetic part 51 of the magnetic covering portion 5, and disposed between the second lateral part 212 of the magnetic core main body 21 and the second soft magnetic part 52 of the magnetic covering portion 5. In this embodiment, the first winding 3 and the second winding 4 are disposed between the third soft magnetic part 53 and the fourth soft magnetic part 54 of the magnetic covering portion 5.

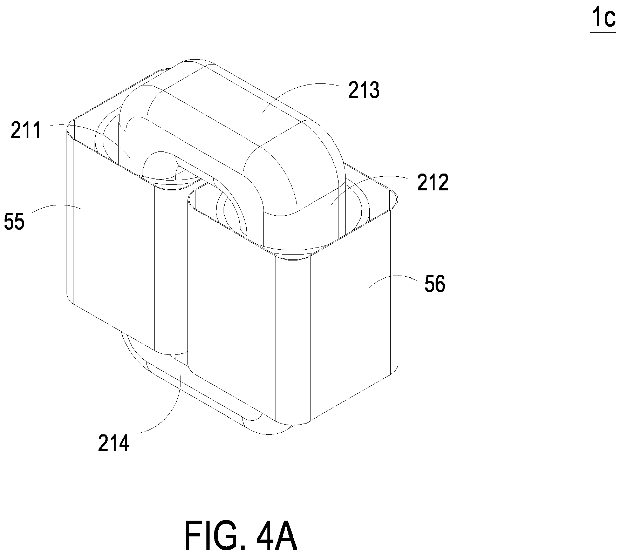

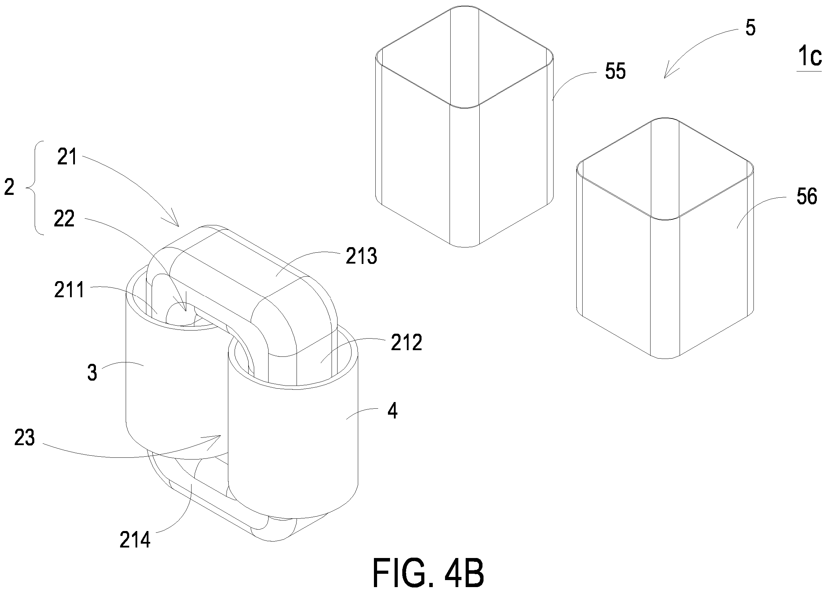

FIG. 4A is a schematic view illustrating a magnetic device according to a fourth embodiment of the present disclosure. FIG. 4B is a schematic exploded view illustrating the magnetic device of FIG. 4A. Compared with the magnetic device 1 of FIGS. 1A and 1B, as shown in FIGS. 4A and 4B, the magnetic covering portion 5 of the magnetic device 1c of this embodiment includes a first covering element 55 and a second covering element 56. The first covering element 55 covers the first lateral part 211 of the magnetic core main body 21. The first winding 3 is disposed between the first lateral part 211 of the magnetic core main body 21 and the first covering element 55 of the magnetic covering portion 5. The second covering element 56 covers the second lateral part 212 of the magnetic core main body 21. The second winding 4 is disposed between the second lateral part 212 of the magnetic core main body 21 and the second covering element 56 of the magnetic covering portion 5. In this embodiment, at least portion of the first covering element 55 and at least portion of the second covering element 56 are penetrated through the hollow portion 22 and the gap 23 between the first winding 3 and the second winding 4, respectively.

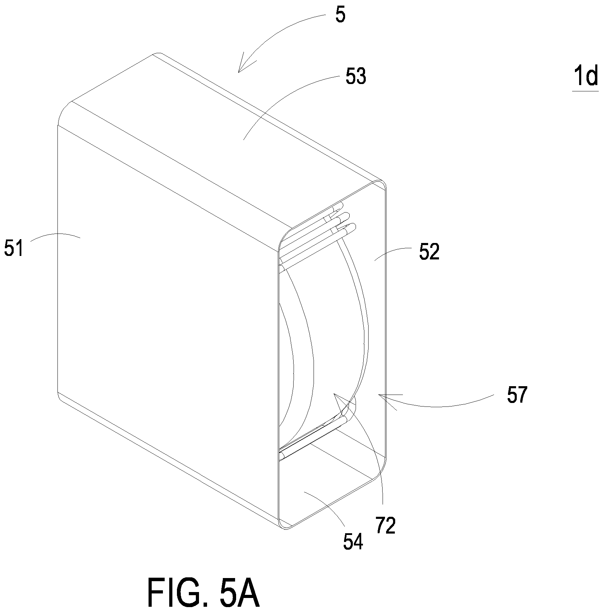

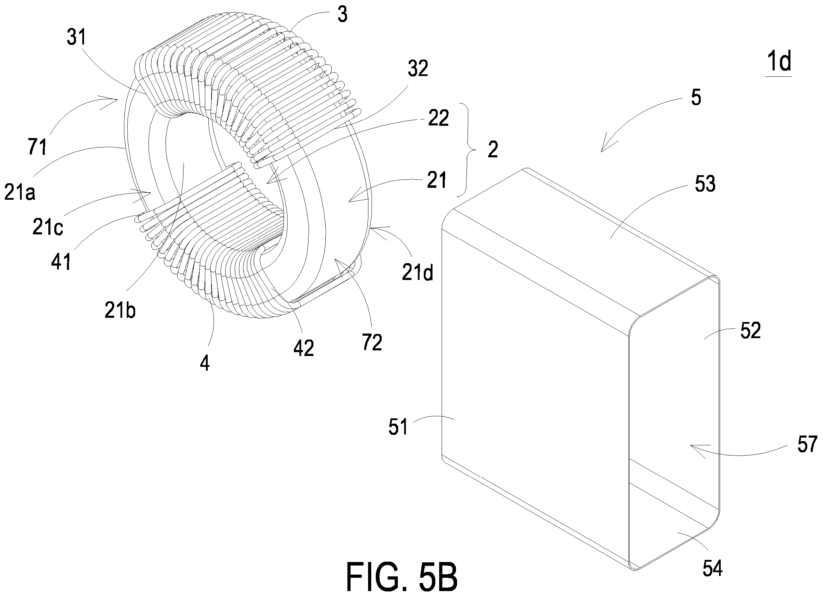

FIG. 5A is a schematic view illustrating a magnetic device according to a fifth embodiment of the present disclosure. FIG. 5B is a schematic exploded view illustrating the magnetic device of FIG. 5A. The magnetic core main body 21 of the magnetic core 2 of the magnetic device 1 of FIGS. 1A and 1B is a hollow rectangular structure. Compared with the magnetic device 1 of FIGS. 1A and 1B, as shown in FIGS. 5A and 5B, the magnetic core main body 21 of the magnetic core 2 of the magnetic device 1d of this embodiment is a ring-shaped structure. The first winding 3 is disposed around a portion of the magnetic core main body 21. A portion of the first winding 3 is penetrated through the hollow portion 22. The second winding 4 is disposed around another portion of the magnetic core main body 21. A portion of the second winding 4 is penetrated through the hollow portion 22. The first winding 3 and the second winding 4 are disposed on two opposite sides of the magnetic core main body 21 of the magnetic core 2, and the first winding 3 and the second winding 4 are not in contact with each other. A first end 31 of the first winding 3 is disposed on a first side of the magnetic core main body 21. A first end 41 of the second winding 4 is disposed on the first side of the magnetic core main body 21. The space between the first end 31 of the first winding 3 and the first end 41 of the second winding 4 forms a first interval 71. A second end 32 of the first winding 3 is disposed on a second side of the magnetic core main body 21. A second end 42 of the second winding 4 is disposed on the second side of the magnetic core main body 21. The space between the second end 32 of the first winding 3 and the second end 42 of the second winding 4 forms a second interval 72.

In this embodiment, the magnetic main body 21 of the magnetic core 2 includes an outer periphery surface 21a, an inner periphery surface 21b, a first lateral surface 21c and a second lateral surface 21d. The outer periphery surface 21a is disposed around the inner periphery surface 21b. The space surrounded by the inner periphery surface 21b defines the hollow portion 22. The first lateral surface 21c and the second lateral surface 21d are opposite to each other, and connected between the outer periphery surface 21a and the inner periphery surface 21b, respectively. The first soft magnetic part 51, the second soft magnetic part 52, the third soft magnetic part 53 and the fourth soft magnetic part 54 of the magnetic core covering portion 5 cover a portion of the outer periphery surface 21a, the first lateral surface 21c and the second lateral surface 21d of the magnetic core main body 21. In this embodiment, the first interval 71 and the second interval 72 are exposed to the exterior of the magnetic device 1d through two openings 57 of the magnetic core covering portion 5. The two openings 57 of the magnetic core covering portion 5 are opposite to each other.

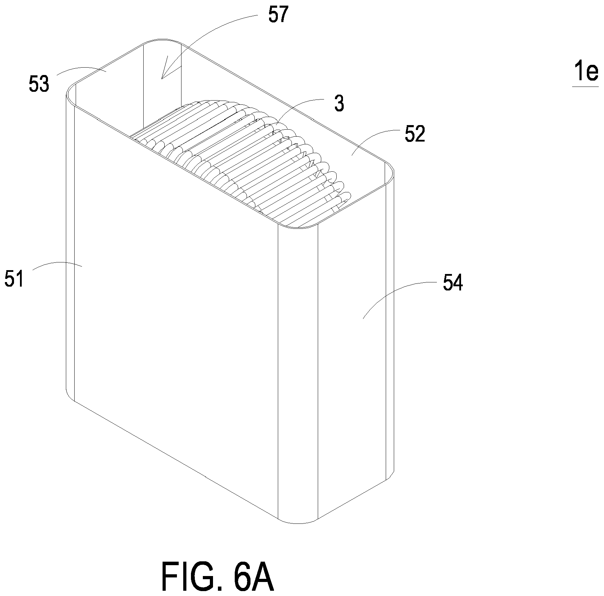

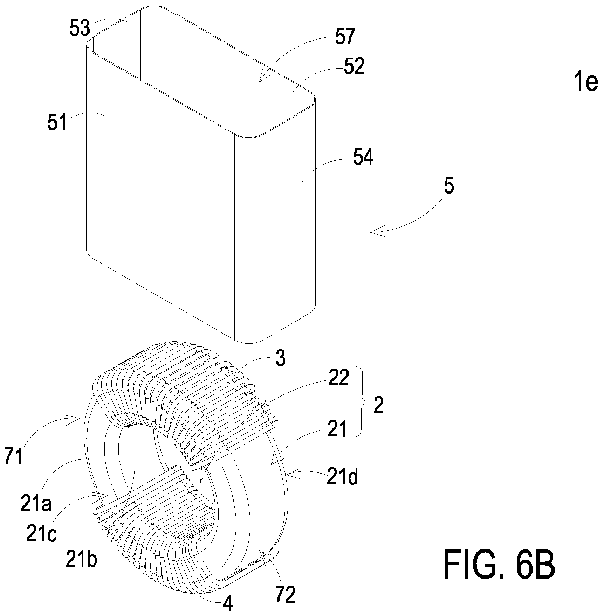

In some embodiments, the structures of the magnetic covering portion 5 covering the first winding 3 and the second winding 4 can be adjusted. FIG. 6A is a schematic view illustrating a magnetic device according to a sixth embodiment of the present disclosure. FIG. 6B is a schematic exploded view illustrating the magnetic device of FIG. 6A. Compared with the magnetic device 1d of FIGS. 5A and 5B, as shown in FIGS. 6A and 6B, the first interval 71 and the second interval 72 of the magnetic device 1e of this embodiment are covered by the magnetic covering portion 5 and not exposed to the exterior of the magnetic device 1e. The first winding 3 and the second winding 4 are exposed to the exterior of the magnetic device 1e through two openings 57 of the magnetic core covering portion 5. The two openings 57 of the magnetic core covering portion 5 are opposite to each other.

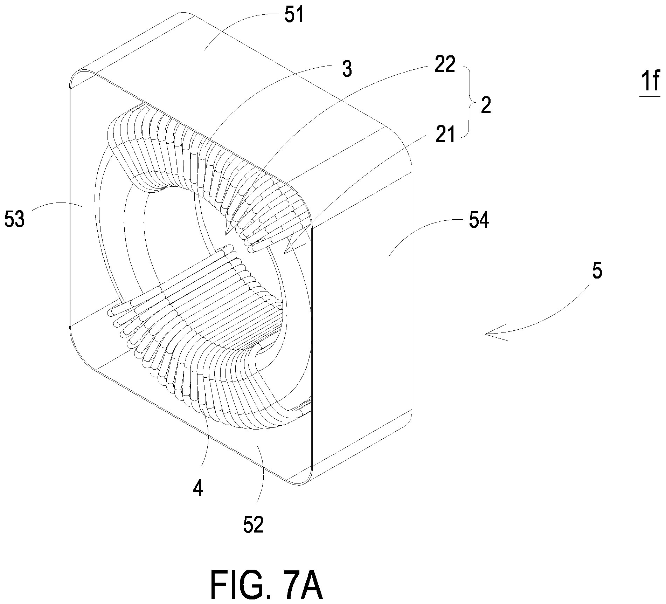

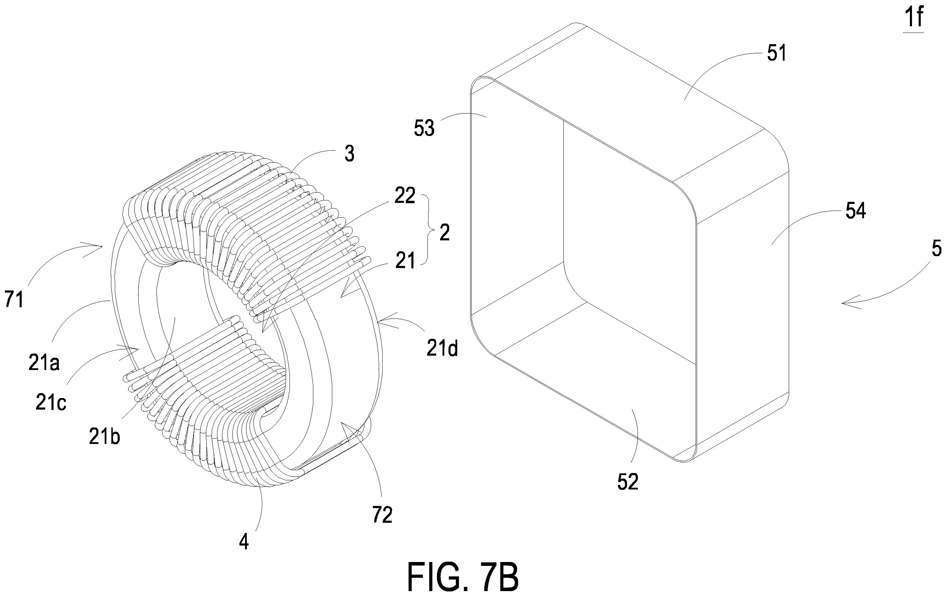

FIG. 7A is a schematic view illustrating a magnetic device according to a seventh embodiment of the present disclosure. FIG. 7B is a schematic exploded view illustrating the magnetic device of FIG. 7A. Compared with the magnetic device 1d of FIGS. 5A and 5B, as shown in FIGS. 7A and 7B, the first soft magnetic part 51, the second soft magnetic part 52, the third soft magnetic part 53 and the fourth soft magnetic part 54 of the magnetic covering portion 5 of the magnetic device 1f of this embodiment covers the outer periphery surface 21a of the magnetic core main body 21. A portion of the first winding 3 is disposed between the outer periphery surface 21a of the magnetic core main body 21 and the first soft magnetic part 51 of the magnetic covering portion 5. A portion of the second winding 4 is disposed between the outer periphery surface 21a of the magnetic core main body 21 and the second soft magnetic part 52 of the magnetic covering portion 5. In this embodiment, the first winding 3 is disposed between the first soft magnetic part 51 of the magnetic covering portion 5 and the second winding 4. The second winding 4 is disposed between the second soft magnetic part 52 of the magnetic covering portion 5 and the first winding 3.

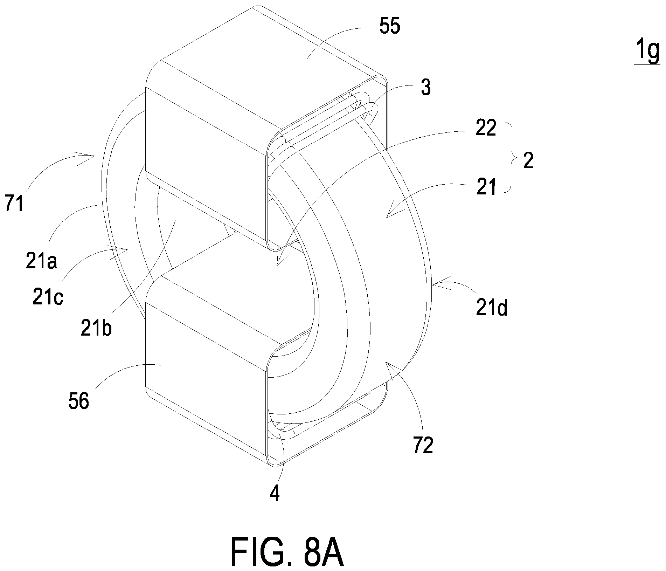

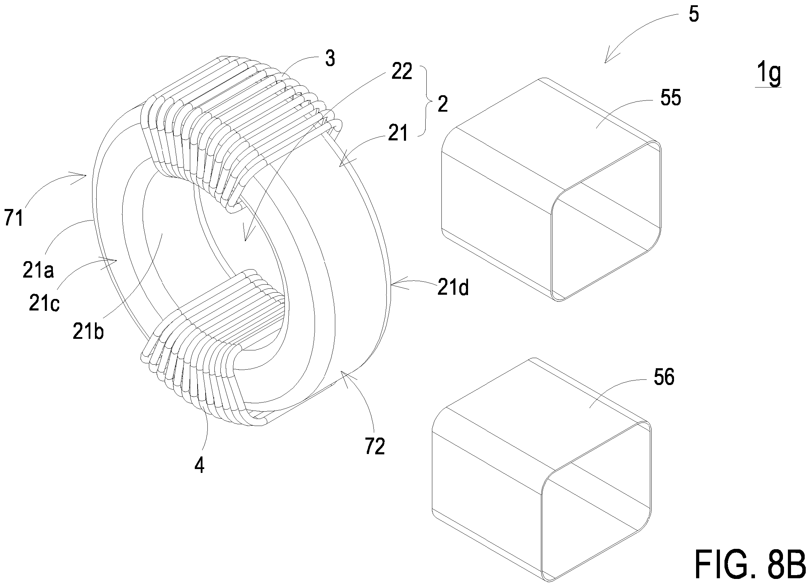

FIG. 8A is a schematic view illustrating a magnetic device according to an eighth embodiment of the present disclosure. FIG. 8B is a schematic exploded view illustrating the magnetic device of FIG. 8A. Compared with the magnetic device 1d of FIGS. 5A and 5B, as shown in FIGS. 8A and 8B, the magnetic covering portion 5 of the magnetic device 1g of this embodiment includes a first covering part 55 and a second covering part 56. The first covering part 55 covers the first winding 3. The first winding 3 is disposed between the magnetic core main body 21 and the first covering part 55 of the magnetic covering portion 5. The second covering part 56 covers the second winding 4. The second winding 4 is disposed between the magnetic core main body 21 and the second covering part 56 of the magnetic covering portion 5. In this embodiment, at least portion of the first covering part 55 and at least portion of the second covering part 56 are penetrated through the hollow portion 22, respectively.

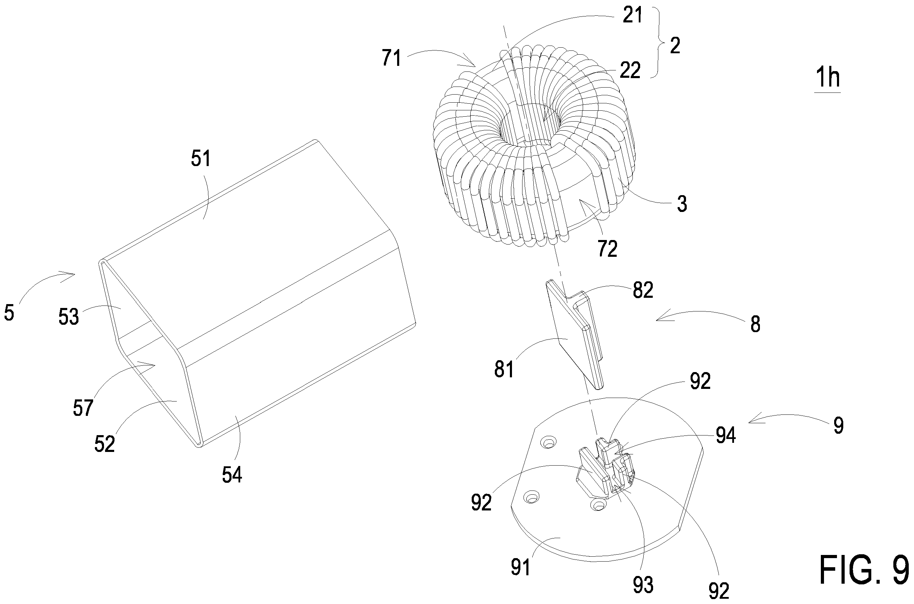

FIG. 9 is a schematic exploded view illustrating a magnetic device according to a ninth embodiment of the present disclosure. Compared with the magnetic device 1e of FIGS. 6A and 6B, as shown in FIG. 9, the magnetic device 1h of this embodiment further includes a magnetic plate 8 and a base 9. The magnetic plate 8 is disposed in the hollow portion 22 of the magnetic core 2 and includes a partition plate 81 and a protrusion 82. The extension direction of the partition plate 81 is from the first interval 71 toward the second interval 72. The protrusion 82 is formed from the surface of the partition plate 81 perpendicularly. The base 9 includes a bottom plate 91 and a plurality of locating parts 92. The plurality of locating parts 92 are extended from the surface of the bottom plate 91 perpendicularly. The plurality of locating parts 92 define a first locating groove 93 and a second locating groove 94 collaboratively. The first locating groove 93 is engaged with the partition plate 81 of the magnetic plate 8. The second locating groove 94 is engaged with the protrusion 82 of the magnetic plate 8. In this embodiment, the partition plate 81 of the magnetic plate 8 is disposed in the first locating groove 93. The protrusion 82 of the magnetic plate 8 is disposed in the second locating groove 94. The partition plate 81 and the protrusion 82 are engaged with the plurality of locating parts 92, so that the magnetic plate 8 is connected with the base 9.

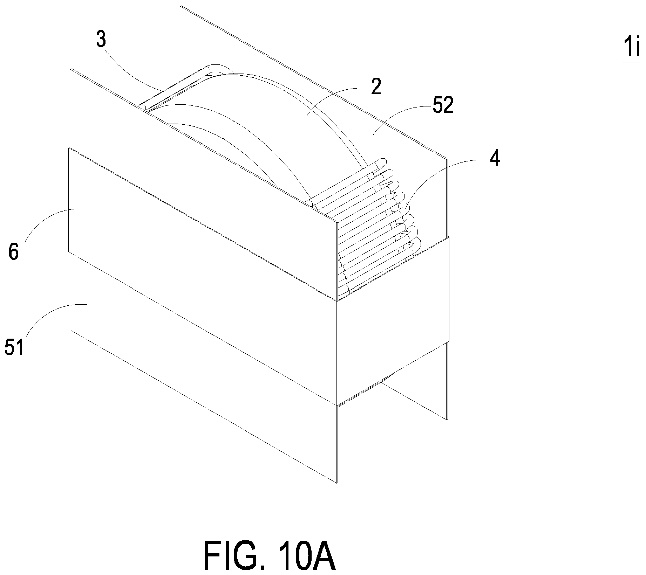

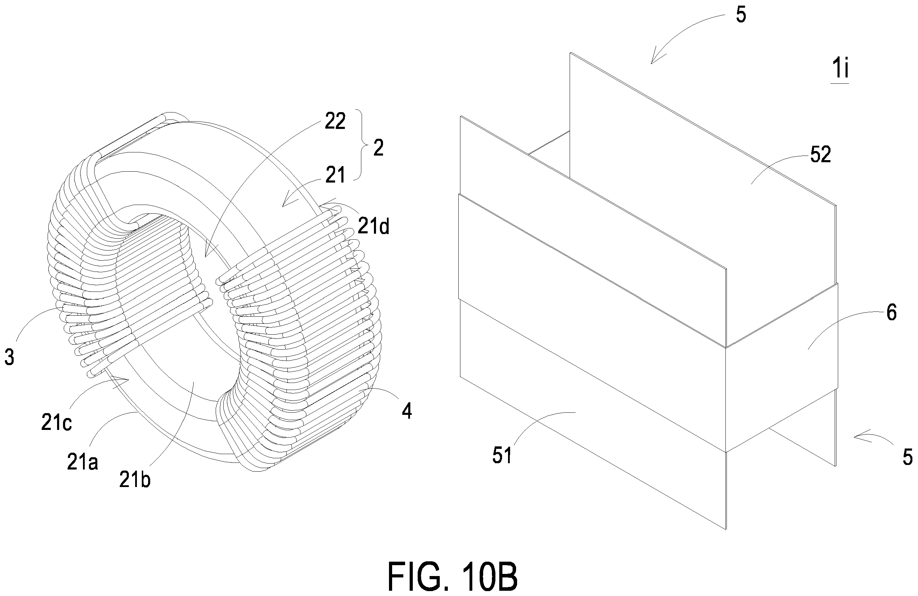

In some embodiments, the number of the soft magnetic part of the magnetic covering portion can be adjusted for enhancing thermal dissipation capability. FIG. 10A is a schematic view illustrating a magnetic device according to a tenth embodiment of the present disclosure. FIG. 10B is a schematic exploded view illustrating the magnetic device of FIG. 10A. The magnetic device 1d of FIGS. 5A and 5B includes four soft magnetic parts. Compared with the magnetic device 1d of FIGS. 5A and 5B, as shown in FIGS. 10A and 10B, the magnetic device 1i of this embodiment only includes two soft magnetic parts, i.e., the first soft magnetic part 51 and the second soft magnetic part 52. The first soft magnetic part 51 and the second soft magnetic part 52 are opposite to each other. The first soft magnetic part 51 covers the first lateral surface 21c of the magnetic core main body 21. The second soft magnetic part 52 covers the second lateral surface 21d of the magnetic core main body 21. In this embodiment, the first winding 3 and the second winding 4 are disposed between the first soft magnetic part 51 and the second soft magnetic part 52. In this embodiment, the magnetic device 1i further includes a fixing portion 6. The fixing portion 6 is disposed around the outer periphery surface of the first soft magnetic part 51 and the outer periphery surface of the second soft magnetic part 52. The first soft magnetic part 51 and the second soft magnetic part 52 are fixed on the magnetic core main body 21. The number of the soft magnetic part of this embodiment is reduced, and only two sides of the magnetic core main body 21 are covered. The magnetic device 1d of this embodiment covering by the soft magnetic parts is an open structure. The thermal dissipation capability is enhanced and the temperature of the power supply applied with the magnetic device 1d is reduced. In this embodiment, the fixing portion 6 is an adhesive material. For example, the fixing portion 6 is a tap.

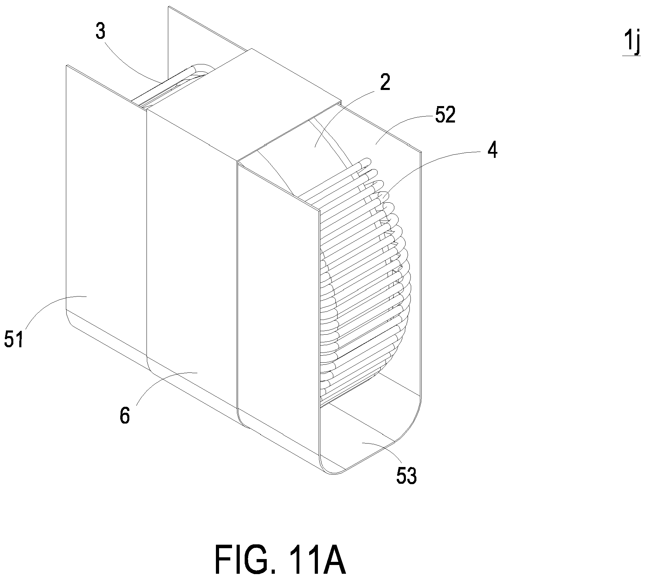

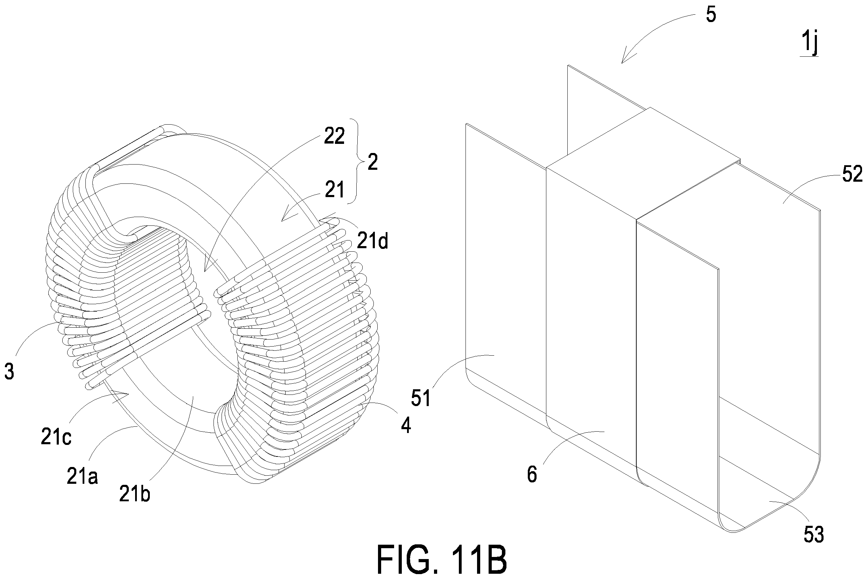

FIG. 11A is a schematic view illustrating a magnetic device according to an eleventh embodiment of the present disclosure. FIG. 11B is a schematic exploded view illustrating the magnetic device of FIG. 11A. Compared with the magnetic device 1i of FIGS. 10A and 10B, as shown in FIGS. 11A and 11B, the magnetic device 1j of this embodiment further includes a third soft magnetic part 53. The third soft magnetic part 53 is connected between one side of the first soft magnetic part 51 and one side of the second soft magnetic part 52. In this embodiment, the fixing portion 6 is disposed around the outer periphery surface of the first soft magnetic part 51, the outer periphery surface of the second soft magnetic part 52 and the outer periphery surface of the third soft magnetic part 53. The first soft magnetic part 51, the second soft magnetic part 52 and the third soft magnetic part 53 are fixed on the magnetic core main body 21 of the magnetic core 2.

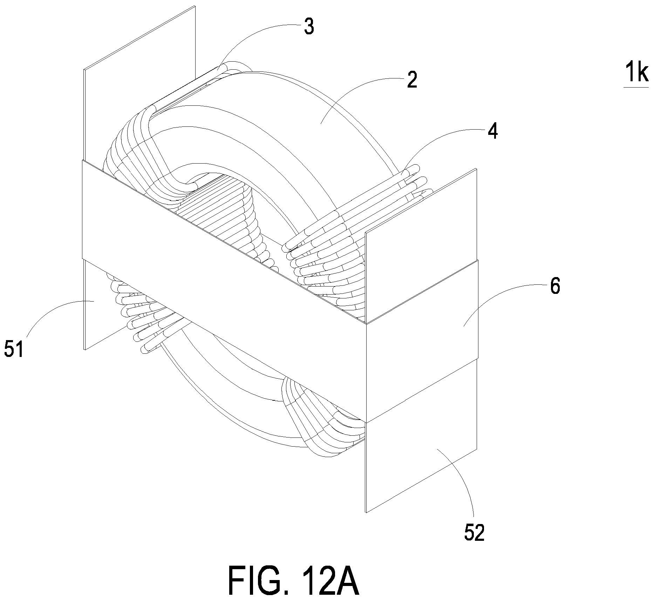

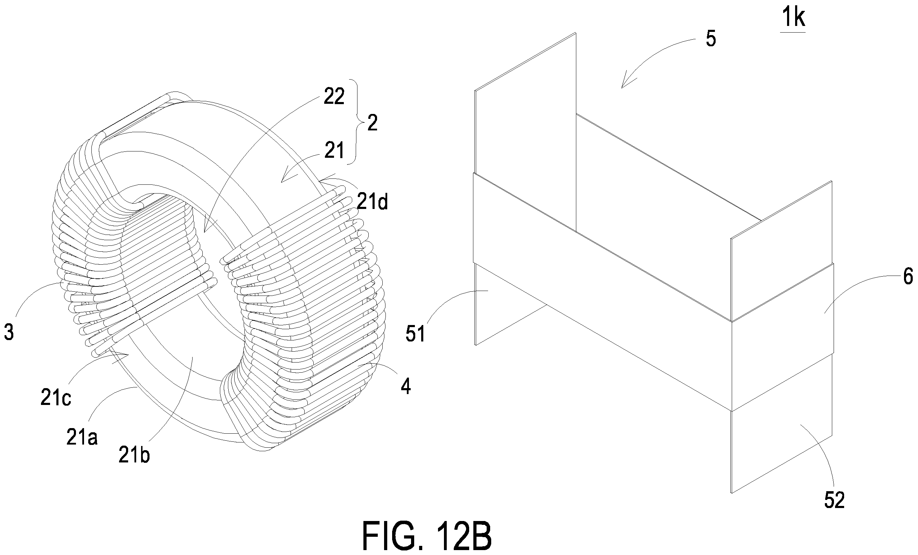

Certainly, the arrangement of the soft magnetic part can be adjusted according to the requirement. FIG. 12A is a schematic view illustrating a magnetic device according to a twelfth embodiment of the present disclosure. FIG. 12B is a schematic exploded view illustrating the magnetic device of FIG. 12A. The magnetic device 1d of FIGS. 5A and 5B includes four soft magnetic parts. Compared with the magnetic device 1d of FIGS. 5A and 5B, as shown in FIGS. 12A and 12B, the magnetic device 1k of this embodiment only includes two soft magnetic parts, i.e., the first soft magnetic part 51 and the second soft magnetic part 52. The first soft magnetic part 51 and the second soft magnetic part 52 are opposite to each other. The first soft magnetic part 51 ant the second soft magnetic part 52 cover two sides of the outer periphery surface 21a of the magnetic core main body 21, respectively. In this embodiment, the first winding 3 is disposed between the second winding 4 and the first soft magnetic part 51. The second winding 4 is disposed between the first winding 3 and the second soft magnetic part 52. In this embodiment, the magnetic device 1k further includes a fixing portion 6. The fixing portion 6 is disposed around the outer periphery surface of the first soft magnetic part 51 and the outer periphery surface of the second soft magnetic part 52. The first soft magnetic part 51 and the second soft magnetic part 52 are fixed on the magnetic core main body 21.

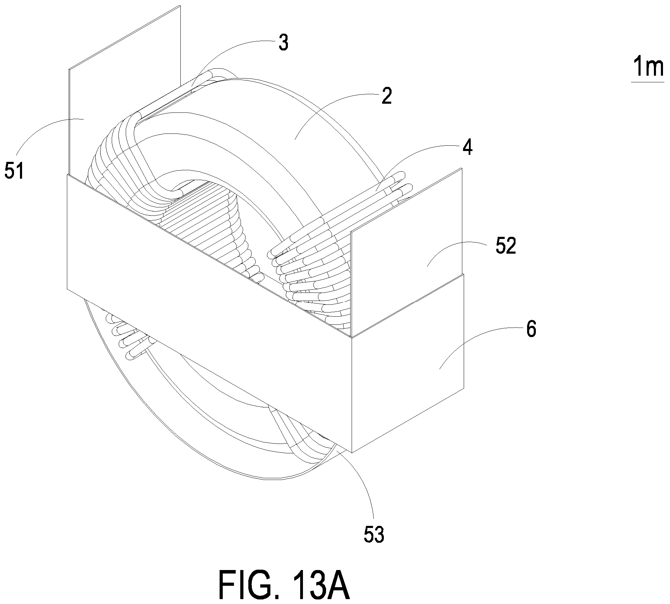

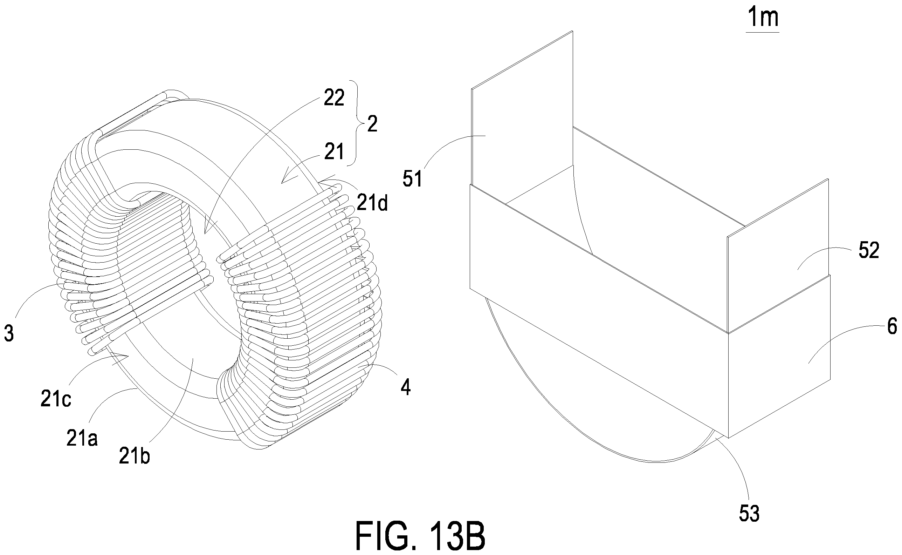

FIG. 13A is a schematic view illustrating a magnetic device according to a thirteenth embodiment of the present disclosure. FIG. 13B is a schematic exploded view illustrating the magnetic device of FIG. 13A. Compared with the magnetic device 1k of FIGS. 12A and 12B, as shown in FIGS. 13A and 13B, the magnetic device 1m of this embodiment further includes a third soft magnetic part 53. The third soft magnetic part 53 is connected between one side of the first soft magnetic part 51 and one side of the second soft magnetic part 52. The third soft magnetic part 53 is a curved structure.

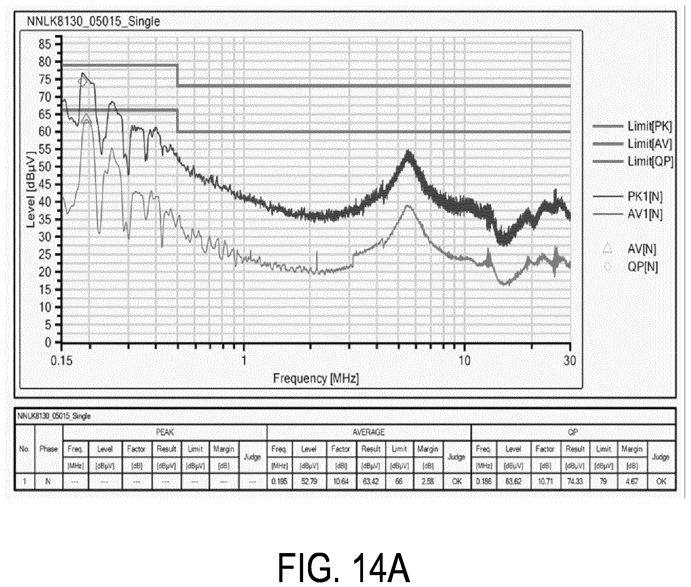

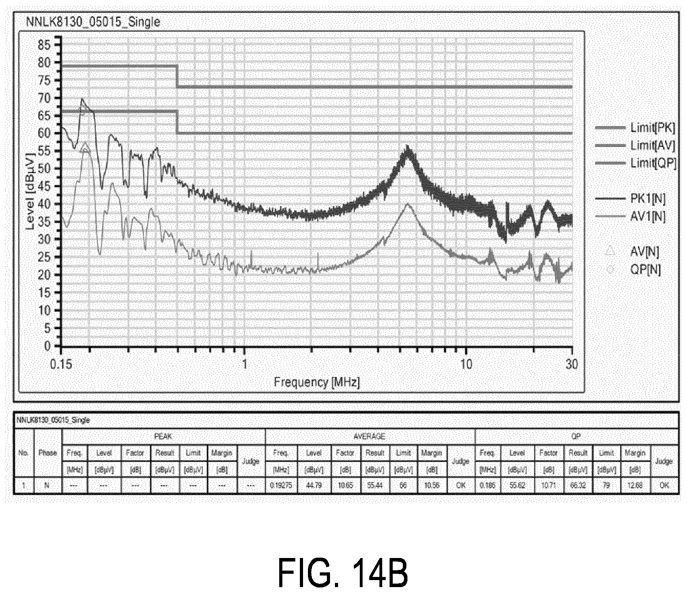

FIG. 14A shows sequence diagram of voltage and frequency of the conventional magnetic device. FIG. 14B shows sequence diagram of voltage and frequency of the magnetic device of the present disclosure. As shown in FIGS. 14A and 14B, the noise in low frequency of the conventional magnetic device is greater than the noise in low frequency of the magnetic device of the present disclosure. For example, the maximum noise of the conventional magnetic device is 78 dBuV, and the maximum noise of the magnetic device of the present disclosure is 70 dBuV. Consequently, the noise is suppressed according to the structure of the magnetic device of the present disclosure.

As mentioned above, the first winding and the second winding of the magnetic device of the present disclosure are disposed between a portion of the magnetic covering portion and another portion of the magnetic covering portion. The leakage inductance and the impedance in high frequency of the magnetic device are enhanced according to the structure of the magnetic covering portion so as to suppress the differential noise. The magnetic device of the present disclosure is a single component so as to have smaller size and smaller number of elements. Consequently, the volume of the power supply unit applied for the magnetic device of the present disclosure is reduced, and has advantage of smaller size, enhanced power density and power efficiency. Moreover, the number of the soft magnetic part of the magnetic device of the present disclosure is reduced. The soft magnetic part only covers two sides of the magnetic core main body. The magnetic device of the present disclosure covering by the soft magnetic parts is an open structure. The thermal dissipation capability is enhanced and the temperature of the power supply applied with the magnetic device is reduced.

## Claims

1. A magnetic device, comprising:
a magnetic core comprising a magnetic core main body and a hollow portion, wherein the hollow portion runs through a center of the magnetic core main body;
at least two windings disposed around the magnetic core main body, wherein each of the at least two windings is at least partially penetrated through the hollow portion; and
a magnetic covering portion, wherein at least portion of the at least two windings is disposed between at least portion of the magnetic covering portion and another portion of the magnetic covering portion.

2. The magnetic device according to claim 1, wherein the at least two windings comprise a first winding and a second winding, the first winding is disposed around a portion of the magnetic core main body and disposed on one side of the magnetic core main body, the second winding disposed around another portion of the magnetic core main body and disposed on another side of the magnetic core main body, the magnetic core main body of the magnetic core comprises a first lateral part, a second lateral part, a first connection part and a second connection part, the first lateral part and the second lateral part are opposite to each other, the first connection part and the second connection part are opposite to each other and connected between the first lateral part and the second lateral part, respectively, wherein the hollow portion is disposed between the first lateral part and the second lateral part and disposed between the first connection part and the second connection part, the first winding is disposed around the first lateral part, a portion of the first winding is penetrated through the hollow portion, the second winding is disposed around the second lateral part, and a portion of the second winding is penetrated through the hollow portion.

3. The magnetic device according to claim 2, wherein the magnetic covering portion comprises a first soft magnetic part, a second soft magnetic part, a third soft magnetic part and a fourth soft magnetic part, the first soft magnetic part and the second soft magnetic part are opposite to each other, the third soft magnetic part and the fourth soft magnetic part are opposite to each other and disposed between the first soft magnetic part and the second soft magnetic part, and the first soft magnetic part, the second soft magnetic part, the third soft magnetic part and the fourth soft magnetic part are integrally formed into one piece.

4. The magnetic device according to claim 3, wherein the first soft magnetic part, the second soft magnetic part, the third soft magnetic part and the fourth soft magnetic part of the magnetic covering portion cover the first lateral part and the second lateral part, wherein the first winding is disposed between the first lateral part and the first soft magnetic part of the magnetic covering portion, disposed between the first lateral part and the second soft magnetic part of the magnetic covering portion, and disposed between the first lateral part and the third soft magnetic part of the magnetic covering portion, the second winding is disposed between the second lateral part and the first soft magnetic part of the magnetic covering portion, disposed between the second lateral part and the second soft magnetic part of the magnetic covering portion, and disposed between the second lateral part and the fourth soft magnetic part of the magnetic covering portion, the first winding is disposed between the third soft magnetic part of the magnetic covering portion and the second winding, and the second winding is disposed between the fourth soft magnetic part of the magnetic covering portion and the first winding, wherein a gap is formed between the first winding disposed in the hollow portion and the second winding disposed in the hollow portion, and the magnetic covering portion is not penetrated through the gap.

5. The magnetic device according to claim 3, wherein the first soft magnetic part, the second soft magnetic part, the third soft magnetic part and the fourth soft magnetic part of the magnetic covering portion cover the first lateral part, the second lateral part, the first connection part and the second connection part, wherein the first winding is disposed between the first lateral part and the third soft magnetic part of the magnetic covering portion, the second winding is disposed between the second lateral part and the fourth soft magnetic part of the magnetic covering portion, the first winding is disposed between the third soft magnetic part of the magnetic covering portion and the second winding, and the second winding is disposed between the fourth soft magnetic part of the magnetic covering portion and the first winding, wherein a gap is formed between the first winding disposed in the hollow portion and the second winding disposed in the hollow portion, and the magnetic covering portion is not penetrated through the gap.

6. The magnetic device according to claim 3, wherein the first soft magnetic part, the second soft magnetic part, the third soft magnetic part and the fourth soft magnetic part of the magnetic covering portion covers the first connection part and the second connection part, wherein the first winding is disposed between the first lateral part and the first soft magnetic part of the magnetic covering portion, and disposed between the first lateral part and the second soft magnetic part of the magnetic covering portion, the second winding is disposed between the second lateral part and the first soft magnetic part of the magnetic covering portion, and disposed between the second lateral part and the second soft magnetic part of the magnetic covering portion, and the first winding and the second winding are disposed between the first soft magnetic part and the second soft magnetic part of the magnetic covering portion, wherein a gap is formed between the first winding disposed in the hollow portion and the second winding disposed in the hollow portion, and the magnetic covering portion is not penetrated through the gap.

7. The magnetic device according to claim 2, wherein the magnetic covering portion comprises a first covering part and a second covering part, the first covering part covers the first lateral part, the first winding is disposed between the first lateral part and the first covering part, the second covering part covers the second lateral part, and the second winding is disposed between the second lateral part and the second covering part, wherein a gap is formed between the first winding disposed in the hollow portion and the second winding disposed in the hollow portion, and at least portion of the first covering part and at least portion of the second covering part are penetrated through the gap, respectively.

8. The magnetic device according to claim 1, wherein the at least two windings comprise a first winding and a second winding, the magnetic core main body of the magnetic core is a ring-shaped structure, the first winding is disposed around a portion of the magnetic core main body, a portion of the first winding is penetrated through the hollow portion, the second winding is disposed around another portion of the magnetic core main body, a portion of the second winding is penetrated through the hollow portion, the first winding and the second winding are disposed on two opposite sides of the magnetic core main body, the first winding and the second winding are not in contact with each other, wherein a first end of the first winding is disposed on a first side of the magnetic core main body, a first end of the second winding is disposed on the first side of the magnetic core main body, a first interval is formed between the first end of the first winding and the first end of the second winding, a second end of the first winding is disposed on a second side of the magnetic core main body, a second end of the second winding is disposed on the second side of the magnetic core main body, and a second interval is formed between the second end of the first winding and the second end of the second winding.

9. The magnetic device according to claim 8, wherein the magnetic covering portion comprises a first soft magnetic part, a second soft magnetic part, a third soft magnetic part and a fourth soft magnetic part, the first soft magnetic part and the second soft magnetic part are opposite to each other, the third soft magnetic part and the fourth soft magnetic part are opposite to each other and disposed between the first soft magnetic part and the second soft magnetic part, and the first soft magnetic part, the second soft magnetic part, the third soft magnetic part and the fourth soft magnetic part are integrally formed into one piece.

10. The magnetic device according to claim 9, wherein the magnetic main body of the magnetic core comprises an outer periphery surface, an inner periphery surface, a first lateral surface and a second lateral surface, the outer periphery surface is disposed around the inner periphery surface, the first lateral surface and the second lateral surface are opposite to each other and connected between the outer periphery surface and the inner periphery surface, respectively, the first soft magnetic part, the second soft magnetic part, the third soft magnetic part and the fourth soft magnetic part of the magnetic core covering portion cover a portion of the outer periphery surface, the first lateral surface and the second lateral surface, wherein the first interval and the second interval are exposed to the exterior of the magnetic device through two openings of the magnetic core covering portion, wherein the magnetic covering portion is not penetrated through the hollow portion.

11. The magnetic device according to claim 9, wherein the magnetic main body of the magnetic core comprises an outer periphery surface, an inner periphery surface, a first lateral surface and a second lateral surface, the outer periphery surface is disposed around the inner periphery surface, the first lateral surface and the second lateral surface are opposite to each other and connected between the outer periphery surface and the inner periphery surface, respectively, the first soft magnetic part and the second soft magnetic part, and the first soft magnetic part, the second soft magnetic part, the third soft magnetic part and the fourth soft magnetic part of the magnetic core covering portion cover a portion of the outer periphery surface, the first lateral surface and the second lateral surface, wherein the first winding and the second winding are exposed to the exterior of the magnetic device through two openings of the magnetic core covering portion, wherein the magnetic covering portion is not penetrated through the hollow portion.

12. The magnetic device according to claim 9, wherein the magnetic main body of the magnetic core comprises an outer periphery surface, an inner periphery surface, a first lateral surface and a second lateral surface, the outer periphery surface is disposed around the inner periphery surface, the first lateral surface and the second lateral surface are opposite to each other and connected between the outer periphery surface and the inner periphery surface, respectively, the first soft magnetic part, the second soft magnetic part, the third soft magnetic part and the fourth soft magnetic part of the magnetic core covering portion cover the outer periphery surface, wherein a portion of the first winding is disposed between the outer periphery and the first soft magnetic part of the magnetic covering portion, a portion of the second winding is disposed between the outer periphery surface and the second soft magnetic part of the magnetic covering portion, wherein the first winding is disposed between the first soft magnetic part of the magnetic covering portion and the second winding, and the second winding is disposed between the second soft magnetic part of the magnetic covering portion and the first winding, wherein the magnetic covering portion is not penetrated through the hollow portion.

13. The magnetic device according to claim 8, wherein the magnetic covering portion comprises a first covering part and a second covering part, the first covering part covers the first winding, the first winding is disposed between the magnetic core main body and the first covering part, the second covering part covers the second winding, the second winding is disposed between the magnetic core main body and the second covering part, wherein at least portion of the first covering part and at least portion of the second covering part are penetrated through the hollow portion, respectively.

14. The magnetic device according to claim 8, wherein the magnetic device comprises a magnetic plate and a base, the magnetic plate is disposed in the hollow portion and comprises a partition plate and a protrusion, an extension direction of the partition plate is from the first interval toward the second interval, the protrusion is formed from a surface of the partition plate perpendicularly, the base comprises a bottom plate and a plurality of locating parts, the plurality of locating parts are extended from a surface of the bottom plate perpendicularly, the plurality of locating parts define a first locating groove and a second locating groove, wherein the first locating groove is engaged with the partition plate, the second locating groove is engaged with the protrusion, wherein the partition plate is disposed in the first locating groove, the protrusion is disposed in the second locating groove, and the partition plate and the protrusion are engaged with the plurality of locating parts, so that the magnetic plate is connected with the base.

15. The magnetic device according to claim 8, wherein the magnetic covering portion comprises a first soft magnetic part and a second soft magnetic part, the first soft magnetic part and the second soft magnetic part are opposite to each other, the magnetic main body of the magnetic core comprises an outer periphery surface, an inner periphery surface, a first lateral surface and a second lateral surface, the outer periphery surface is disposed around the inner periphery surface, the first lateral surface and the second lateral surface are opposite to each other and connected between the outer periphery surface and the inner periphery surface, respectively, the first soft magnetic part and the second soft magnetic part of the magnetic core covering portion cover the first lateral surface and the second lateral surface, respectively, wherein the first winding and the second winding are disposed between the first soft magnetic part and the second magnetic part, wherein the magnetic device comprises a fixing portion disposed around an outer periphery surface of the first soft magnetic part and an outer periphery surface of the second soft magnetic part, and the first soft magnetic part and the second soft magnetic part are fixed on the magnetic core main body of the magnetic core.

16. The magnetic device according to claim 15, wherein the magnetic covering portion comprises a third soft magnetic part connected between one side of the first soft magnetic part and one side of the second soft magnetic part, wherein the fixing portion is disposed around the outer periphery surface of the first soft magnetic part, the outer periphery surface of the second soft magnetic part and an outer periphery surface of the third soft magnetic part, and the first soft magnetic part, the second soft magnetic part and the third soft magnetic part are fixed on the magnetic core main body of the magnetic core.

17. The magnetic device according to claim 8, wherein the magnetic covering portion comprises a first soft magnetic part and a second soft magnetic part, the first soft magnetic part and the second soft magnetic part are opposite to each other, the magnetic main body of the magnetic core comprises an outer periphery surface, an inner periphery surface, a first lateral surface and a second lateral surface, the outer periphery surface is disposed around the inner periphery surface, the first lateral surface and the second lateral surface are opposite to each other and connected between the outer periphery surface and the inner periphery surface, respectively, the first soft magnetic part and the second soft magnetic part of the magnetic core covering portion cover two sides of the outer periphery surface, wherein the first winding is disposed between the second winding and the first soft magnetic part, the second winding is disposed between the first winding and the second soft magnetic part, wherein the magnetic device comprises a fixing portion disposed around an outer periphery surface of the first soft magnetic part and an outer periphery surface of the second soft magnetic part, and the first soft magnetic part and the second soft magnetic part are fixed on the magnetic core main body of the magnetic core.

18. The magnetic device according to claim 17, wherein the magnetic covering portion comprises a third soft magnetic part connected between one side of the first soft magnetic part and one side of the second soft magnetic part, wherein the third soft magnetic part is a curved structure.
